# EUROPEAN PATENT APPLICATION

(11) **EP 4 678 519 A1**
(43) Date of publication of application: **14.01.2026**
(21) Application number: 25188836.8
(22) Date of filing: 10.07.2025
(51) Int. Cl.: B62D 35/02, B62D 37/02

(54) **ROAD-USE MOTOR VEHICLE**

(30) Priority: 11.07.2024 IT 202400016114
(71) Applicant: FERRARI S.p.A., 41100 Modena (IT)
(72) Inventor: BALLATORE, Marco, 41100 MODENA (IT); SANCHEZ GOMEZ, Isaac Joaquin, 41100 MODENA (IT)
(74) Representative: Studio Torta S.p.A.

(57) **Abstract**

A road-use motor vehicle (1) comprising: a vehicle-body (2) provided with a plurality of ground-resting wheels (3, 4); a powertrain adapted to drive into rotation at least one of said ground-resting wheels (3, 4); an underbody (5), which is arranged to cover, or is integrated into, the lower part of the vehicle-body (2) so as to directly face the ground; at least one pair of side skirts (10) that extend cantilevered from the underbody (5), on opposite sides of a vehicle vertical midplane (M), and are structured so as to vertically move their lower longitudinal edge (10a); and an electronic control system, which is adapted to actuate said side skirts (10) so as to vary the ground distance (d) of said side skirts (10).

## Description

### CROSS-REFERENCE TO RELATED PATENT APPLICATIONS

This application claims priority from Italian Patent Application No. 102024000016114 filed on 11 July 2024, the content of which is herein incorporated by reference.

### TECHNICAL FIELD

The present invention relates to a road-use motor vehicle.

More specifically, the present invention preferably relates to a high-performance road-use passenger car, to which the following disclosure will make explicit reference without thereby loosing generality.

### BACKGROUND ART

As is known, high-performance road-use passenger cars are usually provided with a series of front and/or rear spoilers, which have the function of creating a high vertical load (downforce) at high speeds, so as to increase the grip of the tyres on the ground.

Unfortunately, the presence of the spoilers increases the aerodynamic drag coefficient of the vehicle, **i.e.** the resistance to forward motion of the passenger car, with all the problems that this entails when the passenger car is electrically propelled.

The recharging times of the battery pack of an electrically propelled passenger car, in fact, are still significantly longer than the time required to fill up the tank of a passenger car having an internal combustion engine, thus all manufacturers of electrically-propelled passenger cars seek to optimise electric energy consumption so as to maximise the range of the vehicle.

Clearly, in the case of high-performance electrically-propelled passenger cars, the desire/need to maximise the range of the vehicle is in conflict with the need to have, at least at high speeds, a high vertical aerodynamic load (downforce) .

In the past, some manufacturers of racing cars have developed solutions that allow the vertical aerodynamic load (downforce) of the vehicle to be increased without excessively increasing its aerodynamic drag coefficient.

Among the best-known aerodynamic solutions there is that of equipping the underbody of the passenger car with a flat floor, which usually ends at the rear in a diffuser.

When the vehicle is in motion at high speed, the flat shape of the underbody generates, beneath the passenger car, a depression (low-pressure air zone) which, in turn, generates a vertical force that tends to press the passenger car to the ground (downforce).

In addition, to further increase the vertical aerodynamic load (downforce) of the passenger car, the underbody with a flat floor has often been combined with a pair of rigid vertical bands, traditionally called skirts, which extend parallel to the longitudinal axis of the vehicle, along the right and left sides of the underbody, and are fixed to the underbody so as to extend cantilevered downwards up to graze the ground, so as to prevent the disturbed airflows that flow along the lateral sides of the passenger car from gliding underneath it, reducing the downforce effect of the underbody with a flat floor.

Unfortunately, while the underbody with flat floor has also been transferred to mass-produced high-performance road-use passenger cars, the use of skirts is made impossible by the multitude of humps, dips, depressions and other asperities and imperfections of the road surface, which characterise any urban or suburban road intended for the circulation of public and/or private motor vehicles for the transport of goods and/or people.

Impacts against the asperities of the road surface, in fact, would irreparably destroy the skirts after just a few kilometres of travel.

In addition, the presence of the skirts may make the sale of the passenger car impossible in some countries, where approval regulations provide that the passenger car must have, under static conditions, a minimum ground clearance greater than a predetermined limit value.

### SUMMARY OF THE INVENTION

Aim of the present invention is to solve all the technical problems connected to the skirts, which make their installation impossible on road-use passenger cars, advantageously with electric or hybrid propulsion.

In accordance with the above aims, according to the present invention there is provided a road-use motor vehicle as defined in Claim 1 and preferably, though not necessarily, in any of the claims dependent thereon.

### BRIEF DESCRIPTION OF THE DRAWINGS

The present invention will now be described with reference to the accompanying drawings, which illustrate a non-limiting embodiment thereof, in which:
- Figure 1 is a side view of a road-use passenger car realised in accordance with the teachings of the present invention, with parts in transparency and parts removed for clarity's sake;
- Figure 2 is a schematic front view, with parts in section and parts removed for clarity's sake, of the passenger car shown in Figure 1 in a first operating configuration;
- Figure 3 is a schematic front view, with parts in section and parts removed for clarity's sake, of the passenger car shown in Figure 1 in a second operating configuration; whereas
- Figure 4 is a perspective view of the lower part of the passenger car shown in the preceding figures.

### DETAILED DESCRIPTION OF THE EMBODIMENTS

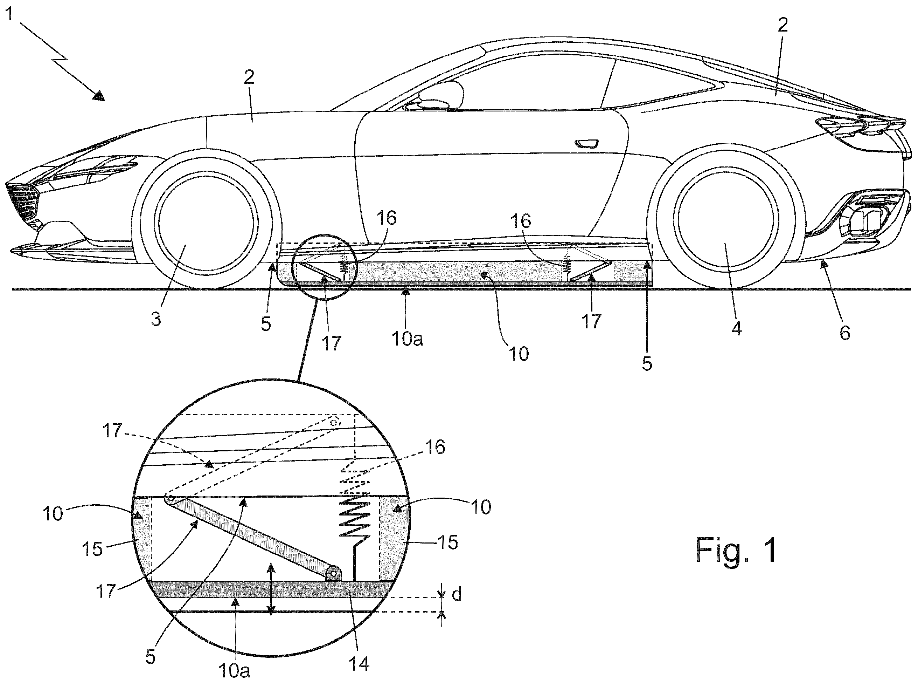

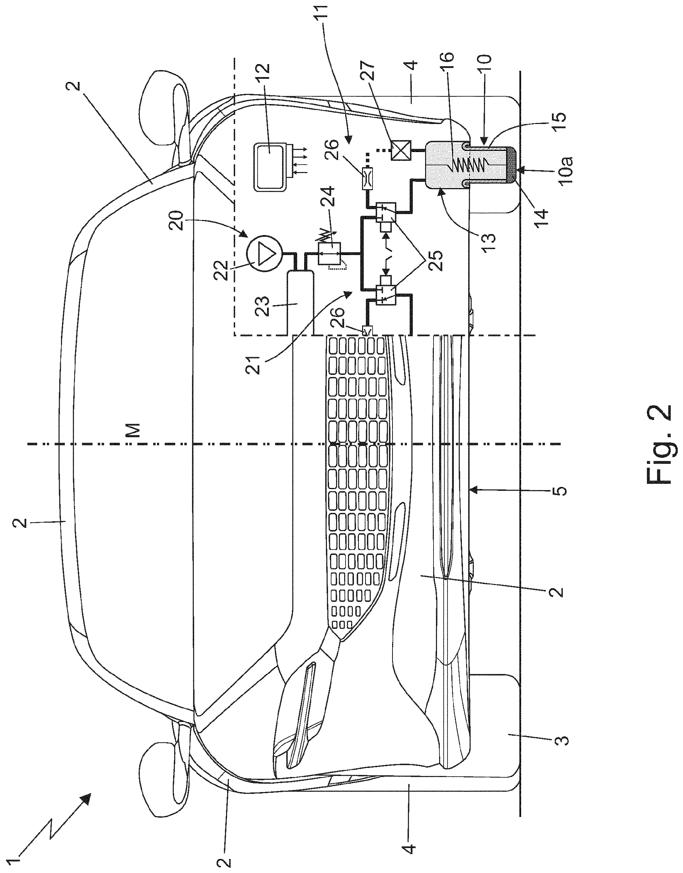

With reference to Figures 1 and 2, number 1 denotes as a whole a road-use motor vehicle, preferably with electric or hybrid propulsion, which is provided with ground-resting wheels and is advantageously suitable for transporting goods and/or persons.

More specifically, the motor vehicle 1 is preferably a road-use passenger car, i.e. a road motor vehicle for the private transport of persons.

The motor vehicle 1, in particular, is provided with a rigid vehicle-body 2, preferably with a self-supporting structure, which rests on the ground by means of a plurality of advantageously tyred, ground-resting wheels and is provided with a passenger compartment structured and dimensioned to accommodate the vehicle driver (i.e. the person who drives the road vehicle) and preferably also at least one passenger advantageously located alongside the said driver.

In addition, the motor vehicle 1 comprises: a powertrain (not shown in the figures), which is located on the vehicle-body 2, or more advantageously within the vehicle-body 2, and is adapted to drive into rotation at least one or, more conveniently, at least one pair of said ground-resting wheels; and at least one electronic vehicle-control unit (not shown in the figures), which is located on the vehicle-body 2, or more advantageously within the vehicle-body 2, receives and processes the commands given by the vehicle driver, for example via the accelerator pedal (not shown in the figures), and is adapted to command the powertrain as a function of such commands.

More specifically, the vehicle-body 2 is preferably oblong in shape, and preferably rests on the ground via at least one pair of front wheels 3 and at least one pair of rear wheels 4. Preferably, the vehicle-body 2 is furthermore mainly made of metallic and/or composite material.

The front wheels 3 and the rear wheels 4, on the other hand, are preferably arranged on the vehicle-body 2 in pairs on opposite sides of the vertical midplane M of the vehicle, advantageously substantially at the vertices of a rectangle or an isosceles trapezium. Furthermore, the passenger compartment of vehicle-body 2 is preferably located between the front wheels 3 and the rear wheels 4.

In addition, the front wheels 3 are preferably idle and steerable wheels, whereas the rear wheels 4 are preferably drive and optionally also steerable wheels.

In other words, the powertrain is preferably adapted to drive into rotation solely the rear wheels 4.

In a different embodiment, however, the powertrain could be adapted to drive into rotation the front wheels 3 in addition to, or in place of, the rear wheels 4.

In other words, the front wheels 3 may be drive wheels in addition to, or in place of, the rear wheels 4.

Preferably, the powertrain is furthermore an electric or hybrid powertrain.

In other words, the powertrain preferably comprises: at least one electric motor which is placed on the vehicle-body 2, or more advantageously within the vehicle-body 2, and is adapted to drive into rotation the front wheels 3 and/or the rear wheels 4; a rechargeable-type electric energy accumulator, which is placed on the vehicle-body 2, or more advantageously within the vehicle-body 2, and is capable of storing, inside itself, a determined quantity of electric energy to be supplied to the electric motor or motors; and an electrical power unit, which is placed on the vehicle-body 2, or more advantageously within the vehicle-body 2, is interposed between the electric energy accumulator and the electric motor or motors, and is adapted to control/regulate the flow of electric energy towards the electric motor or motors preferably on the basis of the commands coming from the electronic vehicle control unit.

In other words, the electronic vehicle control unit is adapted to command the electrical power unit as a function of the commands given by the vehicle driver.

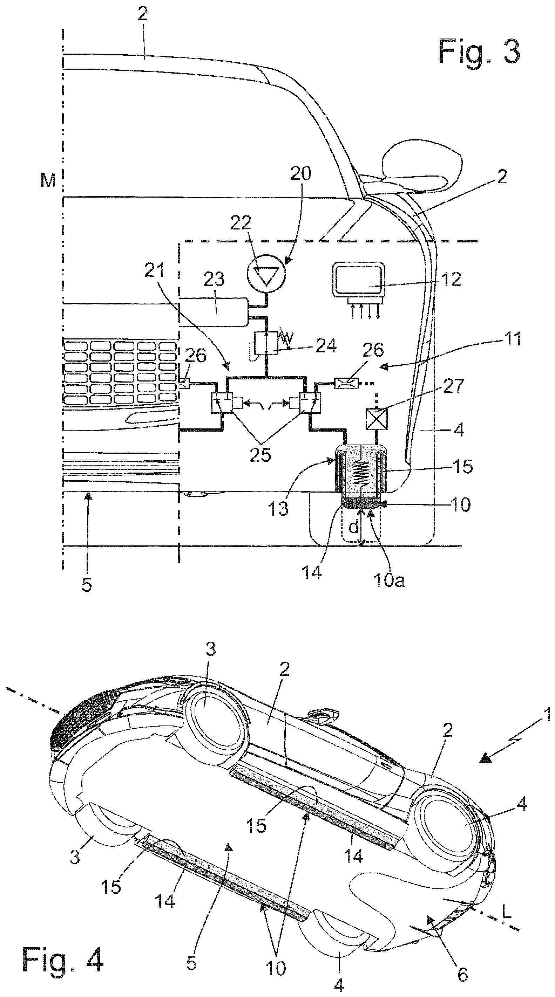

With particular reference to Figure 4, in addition the motor vehicle 1 is provided with an underbody 5, which is arranged to cover, or is integrated into, the lower part of the vehicle-body 2 so as to directly face the ground, and is preferably shaped/structured so as to increase the vertical aerodynamic load (downforce) acting on the motor vehicle 1.

In other words, the underbody 5 is preferably shaped/ structured so as to cause, when the motor vehicle 1 is in motion, a depression (reduction of the air pressure) in the area beneath the motor vehicle 1, which in turn increases the vertical aerodynamic load acting on the motor vehicle 1.

More specifically, the underbody 5 preferably has a substantially flat profile, and advantageously ends at the rear in a diffuser 6 with a diverging profile.

With reference to Figures 1 to 4, the motor vehicle 1 furthermore comprises at least one pair of side skirts 10 that are located on the underbody 5 on opposite sides of the vertical midplane M of the vehicle, and are structured so as to selectively protrude cantilevered from the underbody 5 towards the underlying ground, to prevent the (disturbed) airflows that flow along the lateral sides of the motor vehicle 1 from reaching the central area of the underbody 5.

More specifically, the side skirts 10 are oblong in shape and extend longitudinally along the underbody 5, one spaced alongside the other on opposite sides of the vertical midplane M of the vehicle, so as to flank the central part of the underbody 5 on opposite sides thereof.

The side skirts 10, moreover, project cantilevered from the underbody 5 towards the underlying ground advantageously in a substantially vertical direction, and are preferably shaped/dimensioned so as to arrive nearly grazing (i.e. a few centimetres away from) the underlying ground, in order to prevent the disturbed airflows that flow along the lateral sides of the motor vehicle 1 from reaching the area beneath the underbody 5.

More specifically, the side skirts 10 are preferably located on the underbody 5 in a substantially specular position on opposite sides of the vertical midplane M.

Moreover, the side skirts 10 are preferably substantially ribbonlike, i.e. they are narrow and elongated in shape, and are preferably fixed to the load-bearing vehicle-body 2 and/or to the underbody 5 substantially along the edge.

With reference to Figures 1, 2 and 3, furthermore the side skirts 10 are structured so as to vertically move/shift their lower longitudinal edge 10a, and the motor vehicle 1 is additionally provided with an electronic control system, which is located on the vehicle-body 2, or more advantageously within the vehicle-body 2, and is adapted to actuate the side skirts 10 so as to vary/modify the distance from the ground of the side skirts 10, or rather the ground distance d of the lower longitudinal edges 10a of the side skirts 10.

In other words, the electronic control system is adapted to raise and lower the lower longitudinal edge 10a of the side skirts 10, so as to vary the ground distance d of said side skirts 10, or rather of the lower longitudinal edges 10a of said side skirts 10.

More specifically, the electronic control system is preferably adapted to vary/control, advantageously in real time, the position of the side skirts 10, or rather the ground distance d of said side skirts 10, on the basis of one or more physical quantities and/or vehicle parameters relating to the motor vehicle 1.

Preferably, the physical quantities and/or vehicle parameters furthermore comprise, for example, quantities relating to the motion of the vehicle (speed and/or acceleration) and/or parameters relating to the stance of the vehicle (ground clearance, roll angle) and/or parameters relating to the state of the road surface (presence of humps, dips, depressions and other asperities and imperfections of the road surface) and/or quantities relating to the environment surrounding the vehicle (air temperature and/or humidity, precipitation and/or other ongoing atmospheric events, etc.).

Clearly, the electronic control system may vary the ground distance d of the side skirts 10 also on the basis of commands given directly by the vehicle driver.

In addition, the electronic control system is preferably also adapted to vary, in real time, the position of the side skirts 10, so as to continuously maintain the ground distance d of the side skirts 10, or rather the ground distance d of the lower longitudinal edge 10a of the side skirts 10, at a predetermined target value.

With reference to Figures 1 to 4, the side skirts 10, in particular, are structured so as to move their lower longitudinal edge 10a substantially vertically between a fully lowered position (see Figures 1, 2 and 4) and a raised position (see Figure 3).

In the fully lowered position (see Figures 1, 2 and 4), the ground distance d of the side skirt 10, or rather of the lower longitudinal edge 10a of the side skirt 10, assumes the minimum value. In the raised position (see Figure 3), on the other hand, the ground distance d of the side skirt 10, or rather of the lower longitudinal edge 10a of the side skirt 10, assumes the maximum value.

Preferably, the minimum value of the ground distance d furthermore ranges between 0,5 and 5 cm (centimetres) and more conveniently ranges between 0,5 and 2 cm.

More specifically, in the raised position the lower longitudinal edge 10a of the side skirt 10 is preferably substantially parallel to and/or flush with, or even substantially coplanar with, the underbody 5.

In the fully lowered position, on the other hand, the side skirt 10 projects cantilevered from the underbody 5 and extends towards the underlying ground up to arrive almost grazing the underlying ground, so as to prevent the disturbed airflows that flow along the lateral side of the motor vehicle 1 from reaching the area at centre of the underbody 5.

The electronic control system, in turn, is preferably adapted to move the lower longitudinal edges 10a of the side skirts 10 between said raised position and said fully lowered position.

More specifically, said electronic control system is preferably adapted to move the lower longitudinal edges 10a of the side skirts 10 between said raised position and said fully lowered position as a function of said one or more physical quantities and/or vehicle parameters.

Even more specifically, said electronic control system is preferably adapted to raise and lower the lower longitudinal edges 10a of the side skirts 10 between said raised position and said fully lowered position as a function of the speed of the vehicle and/or the ground clearance of the vehicle, and optionally also as a function of the lateral acceleration of the vehicle, the condition of the road surface (i.e. the presence of humps, dips, depressions and other asperities and imperfections of the road surface), the roll angle of the vehicle and/or other parameters relating to the stance of the motor vehicle 1.

Preferably, the electronic control system is furthermore adapted to vary, in real time, the position of the side skirts 10, so as to continuously maintain the ground distance d of the side skirts 10, or rather the ground distance d of the lower longitudinal edge 10a of the side skirts 10, at a target value advantageously equal to said minimum value.

With reference to Figures 1 to 4, in particular, the side skirts 10 preferably extend beneath the underbody 5, while remaining at least for a section substantially parallel to the vertical midplane of the vehicle M.

In other words, the side skirts 10 preferably extend underneath the underbody 5 while remaining, at least for a section substantially parallel to the vehicle longitudinal axis L.

More specifically, in the example shown the side skirts 10 are preferably substantially rectilinear and advantageously also substantially parallel to the vertical midplane of the vehicle M.

In addition, the side skirts 10 preferably extend along the underbody 5, between the front wheels 3 and the rear wheels 4. In other words, the side skirts 10 are preferably located on the central section of the underbody 5.

With reference to Figures 1 to 4, in addition each side skirt 10 has a variable-volume inflatable structure, which is capable of vertically moving the lower longitudinal edge 10a of the skirt as a function of its internal volume.

In other words, the side skirt 10 has a controllable inflatable structure, which is capable of varying its internal volume so as to be able to vertically move the lower longitudinal edge 10a to and from the underlying ground, i.e. between said raised position (see Figure 3) and said fully lowered position (see Figures 1, 2 and 4).

The electronic control system, on the other hand, is structured so as to inflate and deflate the side skirts 10, so as to vary the ground distance d of the lower longitudinal edges 10a of the side skirts 10.

More specifically, the electronic control system preferably comprises: an actuating assembly 11, which is adapted to inflate and deflate the side skirts 10 so as to raise and lower, on command, the lower longitudinal edge 10a of the side skirts 10; and an electronic control unit 12, which controls the actuating assembly 11 so as to vary, advantageously in real time and/or autonomously, the ground distance d of the side skirts 10.

In other words, the electronic control unit 12 is preferably programmed/configured so as to move the lower longitudinal edges 10a of the side skirts 10 vertically, and advantageously also autonomously, between said raised position and said fully lowered position.

More specifically, the electronic control unit 12 is preferably programmed/configured so as to autonomously move the lower longitudinal edges 10a of the side skirts 10 between said raised position and said fully lowered position as a function of said one or more physical quantities and/or vehicle parameters.

Even more specifically, the electronic control unit 12 is preferably programmed/configured to vertically move the lower longitudinal edges 10a of the side skirts 10 between said raised position and said fully lowered position as a function of the speed of the vehicle and/or the ground clearance of the vehicle, and optionally also as a function of the lateral acceleration of the vehicle, the condition of the road surface (i.e. the presence of humps, dips, depressions and other asperities and imperfections of the road surface), the roll angle of the vehicle and/or of other parameters relating to the stance of the motor vehicle 1.

In addition, the electronic control unit 12 is preferably also programmed/configured so as to move, in real time, the side skirts 10, so as to continuously maintain the ground distance d of the side skirts 10, or rather the ground distance d of the lower longitudinal edge 10a of both the side skirts 10, at a predetermined target value and advantageously equal to said minimum value.

Preferably, the electronic control unit 12 is finally connected to and/or controlled by said electronic vehicle-control unit.

With reference to Figures 1 to 4, in particular the side skirts 10 are located inside respective housing seats 13, which are formed in the underbody 5 and/or in the vehicle-body 2 on opposite sides of the vehicle vertical midplane M, advantageously in a specular position with respect to the latter.

Preferably, when in the raised position, the side skirts 10 are furthermore substantially entirely contained within the respective housing seats 13.

In the fully lowered position (see Figures 1, 2 and 4), therefore, the side skirts 10 project cantilevered outside the respective housing seats 13 so as to dispose their lower longitudinal edge 10a at the minimum distance d from the underlying ground.

In the raised position (see Figure 3), on the other hand, the side skirts 10 are preferably substantially entirely contained within the respective housing seats 13 so as to dispose their lower longitudinal edge 10a substantially coplanar with the underbody 5 and/or with the opening of the housing seat 13.

In addition, at least one or, more conveniently, each side skirt 10 preferably comprises: a longitudinal skid 14, advantageously with a substantially rigid structure, which contributes to forming the lower longitudinal edge 10a of the side skirt 10; and at least one, advantageously oblong-shaped, bladder 15, which is interposed between the longitudinal skid 14 and the underbody 5 and/or the vehicle-body 2, and is capable of varying its internal volume between a maximum value and a minimum value, so as to vertically move the longitudinal skid 14 between said raised position and said fully lowered position.

More specifically, the longitudinal skid 14 is preferably substantially straight and/or preferably has a structure resistant to impacts, cuts and/or abrasions.

Even more specifically, the longitudinal skid 14 preferably has a monolithic structure and is preferably realised of high-strength metallic, plastic or composite material.

The bladder 15, in turn, is preferably structured so as to form a suspended partitioning wall that connects the longitudinal skid 14 to the underbody 5 and/or to the vehicle-body 2, advantageously seamlessly.

More specifically, the bladder 15 preferably has an oblong tubular structure, and preferably extends longitudinally substantially along the entire length of the longitudinal skid 14 and/or of the side skirt.

The bladder 15, furthermore, is preferably fixed beside the underbody 5 and/or the vehicle-body 2, advantageously inside the housing seat 13, whereas the longitudinal skid 14 is preferably firmly fixed to the bladder 15 on the side opposite to the underbody 5 and/or to the vehicle-body **2.**

Preferably, the bladder 15 is moreover adapted to arrange the longitudinal skid 14 in the raised position when its internal volume assumes the minimum value, and to arrange the longitudinal skid 14 in the fully lowered position when its internal volume assumes the maximum value.

In the example shown, in particular, the bladder 15 is preferably substantially straight and preferably has a ribbonlike tubular structure. The longitudinal skid 14, on the other hand, is preferably substantially ski-shaped.

With reference to Figures 1, 2 and 3, moreover each side skirt 10 preferably additionally comprises at least one elastic counteracting member 16 and/or a mechanical anti-traversing suspension 17.

The/each elastic counteracting member 16 preferably connects the longitudinal skid 14 to the underbody 5 and/or to the vehicle-body 2, and is adapted to elastically keep/ maintain the longitudinal skid 14 in the raised position. In other words, the/each elastic counteracting member 16 is preferably adapted to counteract the expansion of the bladder 15.

Preferably, the/each elastic counteracting member 16 is furthermore accommodated within the bladder 15.

The mechanical anti-traversing suspension 17, on the other hand, stably connects the longitudinal skid 14 to the underbody 5 and/or to the vehicle-body 2, and is structured so as to contain/limit the transversal, or rather, horizontal, displacements of the longitudinal skid 14.

In other words, the mechanical anti-traversing suspension 17 is structured so as to prevent the longitudinal skid 14 from moving perpendicularly to the vehicle vertical midplane M, that is horizontally.

Preferably, the mechanical anti-traversing suspension 17 is furthermore accommodated within the bladder 15, as well.

With reference to Figure 1, in the example shown, in particular, the mechanical anti-traversing suspension 17 preferably comprises a swinging arm, which has a first end hinged to the longitudinal skid 14, and a second end hinged to the underbody 5 and/or to the vehicle-body 2, advantageously inside the housing seat 13. Preferably, the swinging arm is furthermore an articulated arm with a pantograph structure.

With reference to Figures 2 and 3, the actuating assembly 11, on the other hand, is preferably adapted to inflate and deflate, on command, the bladder or bladders 15 of each side skirt 10.

More specifically, the actuating assembly 11 preferably comprises: a source of pressurised gas 20, which is capable of supplying a flow of air or other pressurised gas having a pressure higher than that of the external environment; and an electrically-controlled valve assembly 21, which is interposed between the source of pressurised gas 20 and the side skirts 10, or rather the bladder or bladders 15 of the side skirts 10, and is adapted to control the flow of pressurised gas to and from said side skirts 10.

Clearly, the electronic control unit 12 commands the valve assembly 21.

Preferably, the source of pressurised gas 20 furthermore comprises: an electrically-powered compressor 22, which supplies at outlet a flow of pressurised air with a pressure advantageously ranging between 2 and 5 bar; a pressurised-gas accumulator tank 23, which is interposed between the compressor 22 and the valve assembly 21, and is adapted to temporarily receive and accumulate the pressurised air directed towards the valve assembly 21; and optionally also a pressure regulator 24, which is interposed between the accumulator tank 23 and the valve assembly 21.

Clearly, compressor 22 and accumulator tank 23 may be replaced by a high-pressure air or nitrogen cylinder or similar.

In turn, the valve assembly 21 preferably comprises, for each side skirt 10, a three-way valve 25 or similar, which is adapted to selectively and alternatively put said side skirt 10, or rather the bladder or bladders 15 of said side skirt 10, in communication with the source of pressurised gas 20 or with the external environment, advantageously through a flow restrictor 26 which is adapted to limit the flowrate of the gas flow directed towards the outside.

Preferably the electronic control unit 12 is moreover adapted to command both three-way valves 25.

More specifically, the electronic control system preferably additionally comprises, for each side skirt 10, at least one pressure sensor which is adapted to detect, continuously or periodically, the pressure of the gas present inside the side skirt 10, or rather inside the bladder or one of the bladders 15 of the side skirt 10.

In addition, the electronic control system preferably also comprises, for each side skirt 10, at least one position sensor, which is adapted to detect, advantageously in real time or periodically, the distance of the side skirts 10 from the underbody 5, or rather the distance of the lower longitudinal edges 10a of the side skirts 10 from the underbody 5, and/or the distance of the side skirts 10 from the underlying ground, or rather the ground distance d of the lower longitudinal edges 10a of the side skirts 10.

The electronic control unit 12, in turn, is preferably adapted to command the valve assembly 21, or rather the three-way valves 25, also on the basis of the signals arriving from said pressure sensors and/or said position sensors.

More specifically, the electronic control unit 12 is preferably programmed/configured so as to command the two three-way valves 25 separately from one another, each one advantageously also as a function of the signals arriving from the pressure sensor(s) connected to the corresponding side skirt 10 and/or the signals arriving from the position sensor(s).

More specifically, each three-way valve 25 is provided with an inlet and two outlets, and is structured so as to put, on command, the inlet of the valve in direct communication alternatively with each of the two outlets of the same valve.

The inlet of the three-way valve 25 preferably communicates with the inside of the side skirt 10, or rather the bladder or bladders 15 of the side skirt 10. The two outlets of the three-way valve 25, in turn, preferably communicate one with the source of pressurised gas 20 and the other with the external environment, advantageously through the interposition of the flow restrictor 26.

With reference to Figures 2 and 3, finally the electronic control system preferably additionally comprises, for each side skirt 10, at least one relief valve 27, which is adapted to automatically discharge to the outside the pressurised gas present inside the side skirt 10, or rather inside the bladder or bladders 15 of the side skirt 10, when the value of the gas pressure exceeds a predetermined maximum threshold.

Operation of motor vehicle 1 is easily inferable from the above and requires no further explanation.

As regards the electronic control system, it can lower or raise the lower longitudinal edges 10a of the side skirts 10 when the motor vehicle 1 moves at a speed respectively higher or lower than a predetermined reference value.

The advantages connected to the presence of the side skirts 10 with an on-command inflatable structure are remarkable.

Firstly, the side skirts 10 can be lowered only when the speed of the vehicle and/or the conditions of the road surface make their use reasonable.

In addition, the inflatable structure of the side skirts 10 eliminates all the problems deriving from the impact with the road surface.

In event of an impact of the side skirt 10 with protrusions of the road surface, in fact, the bladder or bladders 15 of the side skirt 10 deform elastically, allowing the longitudinal skid 14 to temporarily lift to slide over and overcome the obstacle.

Clearly, the sudden lifting of the longitudinal skid 14 of a side skirt 10 causes a temporary increase in the pressure of the gas contained within the side skirt 10, or rather within the bladder or bladders 15 of the side skirt 10.

The electronic control unit 12 and/or the relief valve 27 can automatically deflate the side skirts 10 if the value of the gas pressure inside the skirts increases excessively.

Finally it is clear that modifications and variations may be made to the motor vehicle 1 without departing from the scope of the present invention.

For example, in a simplified embodiment, the valve assembly 21 may comprise a single three-way valve 25 or similar, which controls the flow of the pressurised gas simultaneously to and from both the side skirts 10. In other words, the inlet of the three-way valve 25 preferably communicates with the inside of both the side skirts 10, or rather with the bladders 15 of both side skirts 10.

In this simplified embodiment, therefore, the two side skirts 10, or rather the bladders 15 of the side skirts 10, are in direct communication to one another, and the pressurised gas can flow freely from one side skirt 10 to the other.

In a more sophisticated embodiment, moreover, the or each side skirt 10 is preferably provided with a single bladder 15 with an oblong tubular structure, which extends substantially for the entire length of the side skirt 10 and is longitudinally subdivided into a series of watertight sectors/compartments, which are separate and sealed from one another.

In this more sophisticated embodiment, furthermore, the valve assembly 21 is preferably structured so as to control the flow of pressurised gas to and from each airtight sector/compartment of the bladder 15 separately from the others.

## Claims

1. A road-use motor vehicle (1) comprising: a vehicle-body (2) provided with a plurality of ground-resting wheels (3, 4); a powertrain adapted to drive into rotation at least one of said ground-resting wheels (3, 4); an underbody (5), which is arranged to cover, or is integrated into, the lower part of the vehicle-body (2) so as to directly face the ground; and at least one pair of side skirts (10), which are arranged on the underbody (5) on opposite sides of a vertical midplane of the vehicle (M), and are adapted to prevent the airflows that flow along the lateral sides of the motor vehicle from reaching the central zone of the underbody (5); the motor vehicle (1) being **characterised in that** said side skirts (10) are structured so as to vertically move their lower longitudinal edge (10a); **and by** further comprising an electronic control system (11, 12), which is adapted to actuate said side skirts (10) so as to be able to vary the ground distance (d) of said side skirts (10).

2. The motor vehicle according to Claim 1, wherein said electronic control system (11, 12) is adapted to vary the ground distance (d) of said side skirts (10) on the basis of one or more physical quantities and/or vehicle parameters.

3. The motor vehicle according to Claim 1 or 2, wherein the side skirts (10) are movable between a raised position and a fully lowered position in which the ground distance (d) of the side skirts (10) assumes the minimum value; the electronic control system (11, 12) being adapted to move the side skirts (10) between said raised position and said fully lowered position.

4. The motor vehicle according to Claim 1, 2 or 3, wherein each side skirt (10) has a variable-volume inflatable structure, which is capable of vertically moving the lower longitudinal edge (10a) of the skirt as a function of its internal volume; the electronic control system (11, 12) being structured so as to inflate and deflate the side skirts (10), in order to vary the ground distance (d) of said lower longitudinal edges (10a).

5. The motor vehicle according to Claim 4, wherein at least one of said pair of side skirts (10) comprises: a longitudinal skid (14) that contributes to forming the lower longitudinal edge (10a) of the side skirt (10); and at least one bladder (15) which is interposed between the longitudinal skid (14) and said underbody (5) and/or said load-bearing vehicle-body (2), and is capable of varying its internal volume between a maximum value and a minimum value, so as to vertically move the longitudinal skid (14) between a raised position and a fully lowered position.

6. The motor vehicle according to Claim 5, wherein said at least one bladder (15) forms a suspended partitioning wall, which connects the longitudinal skid (14) to the underbody (5) and/or to the vehicle-body (2).

7. The motor vehicle according to Claim 5 or 6, wherein the bladder (15) has an oblong tubular structure, and extends longitudinally substantially for the entire length of the longitudinal skid (14) and/or of the side skirt (10).

8. The motor vehicle according to Claim 5, 6 or 7, wherein said side skirt (10) additionally comprises: at least one elastic counteracting member (16) which is adapted to elastically keep/maintain the longitudinal skid (14) in the raised position; and/or a mechanical anti-traversing suspension (17), which stably connects the longitudinal skid (14) to the underbody (5) and/or to the vehicle-body (2), and is structured so as to contain/limit the horizontal displacements of the longitudinal skid (14).

9. The motor vehicle according to Claim 8, wherein said at least one elastic counteracting member (16) and/or said mechanical anti-traversing suspension (17) is/are housed within said at least one bladder (15).

10. The motor vehicle according to any one of Claims 4 to 9, wherein said electronic control system (11, 12) comprises: an actuating assembly (11), which is adapted to inflate and deflate said side skirts (10) so as to raise and lower, on command, the lower longitudinal edge (10a) of the same side skirts (10); and an electronic control unit (12), which commands the actuating assembly (11) so as to vary the ground distance (d) of said side skirts (10).

11. The motor vehicle according to Claim 10, wherein the electronic control unit (12) commands the actuating assembly (11) as a function of said one or more physical quantities and/or vehicle parameters.

12. The motor vehicle according to Claim 10 or 11, wherein the actuating assembly (11) comprises: a pressurised-gas source (20) that supplies at output a pressurised gas with a pressure higher than ambient pressure; and a valve assembly (21) that is interposed between the pressurised-gas source (20) and the side skirts (10), and is adapted to control the flow of the pressurised gas to and from said side skirts (10); the valve assembly (21) being commanded by said electronic control unit (12).

13. The motor vehicle according to any one of Claims 4 to 12, wherein said electronic control system (11, 12) further comprises, for each side skirt (10), at least one relief valve (27), which is adapted to automatically discharge to the outside the pressurised gas present inside the side skirt (10) when the gas-pressure value exceeds a predetermined maximum threshold.

14. The motor vehicle according to any one of Claims 4 to 13, wherein said electronic control system (11, 12) further comprises, for each side skirt (10), at least one pressure sensor that is adapted to detect the pressure of the gas present inside the side skirt (10), and/or at least one position sensor that is adapted to detect the position of the side skirt (10) with respect to the underbody (5) and/or to the ground.

15. The motor vehicle according to Claim 14, wherein the electronic control unit (12) commands the actuating assembly (11) also on the basis of signals arriving from said pressure sensor(s) and/or from said position sensor(s).

16. The motor vehicle according to any one of the preceding claims, wherein said side skirts (10) are located inside respective housing seats (13) that are realized in the underbody (5) and/or in the vehicle-body (2), and are adapted to move their lower longitudinal edge (10a) between a raised position and a fully lowered position; when in the raised position, the side skirts (10) being substantially entirely contained inside the respective housing seats (13).
